Europäisches Patentamt

European Patent Office

Office européen des brevets

(19)

(11) Numéro de publication : **0 007 288**
**B1**

(12) **FASCICULE DE BREVET EUROPÉEN**

(45) Date de publication du fascicule du brevet :
28.04.82

(51) Int. Cl.³ : **G 01 G   3/147, G 01 L   1/22**

(21) Numéro de dépôt : 79810058.2

(22) Date de dépôt : 03.07.79

(54) Dispositif pour mesurer l'intensité d'une force appliquée transversalement sur l'extrémité libre d'une poutre de flexion encastrée.

(30) Priorité : 14.07.78 CH 7658/78

(43) Date de publication de la demande :
23.01.80 (Bulletin 80/02)

(45) Mention de la délivrance du brevet :
28.04.82 Bulletin 82/17

(84) Etats contractants désignés :
BE DE FR GB IT NL

(73) Titulaire : **TERRAILLON**
**72, Route de Bonneville**
**F-74 103 Annemasse (FR)**

(72) Inventeur : **Pidoux, Paul**
**CH-1261 Bassins, Vaud (CH)**
Inventeur : **Prost, Jean-Louis**
**3, Rue de l'Université**
**CH-1205 Genève (CH)**

(74) Mandataire : **Kirker, Gaylord E. et al**
**c/o KIRKER & CIE 14, Rue du Mont-Blanc Case**
**postale 872**
**CH-1211 Genève 1 (CH)**

(56) Documents cités :
FR - A - 2 137 126
FR - A - 2 177 923
FR - A - 2 286 374
US - A - 3 616 690
US - A - 3 863 724

ELECTROTECHNOLOGY, vol. 4, n° 4, octobre 1976
London GB
R.F. RUSS : « Strain-gauged and strain-gauged devices », pages 3-6
CONTROL ENGINEERING, vol. 24, n° 4, avril 1977
New York USA
« Microprocessor Enchances Automatic Weigh-Batching Flexibility », pages 42-44
ELECTRONIQUE & APPLICATIONS INDUSTRIEL-LES,
n° 237, mai 1977
Paris FR
Y. ALEXANDRE : « Le PIC 1650, système complet sur une puce », pages 28 et 29

(56) Documents cités :
FEINWERKTECHNIK & MESSTECHNIK, vol. 86,
n° 1, janvier-février 1978
München DE
M. GALLO et al : « Mikroprozessoren im Waagen-bau » pages 30-35
IEEE SPECTRUM, Vol. 6, n° 10, octobre 1969
New York USA
« New product applications - Digital voltmeter provides computer interface » page 85

Imprimerie Jouve, 18, rue St-Denis, 75001 Paris, France

## Dispositif pour mesurer l'intensité d'une force appliquée transversalement sur l'extrémité libre d'une poutre de flexion encastrée

La présente invention concerne un dispositif pour mesurer l'intensité d'une force appliquée transversalement sur l'extrémité libre d'une poutre de flexion encastrée tel que défini dans la partie générale de la revendication 1.

Le document Electrotechnology vol. 4 n° 4, oct. 1976, p. 3-6 décrit un tel circuit de mesure permettant d'exploiter le signal provenant d'un capteur à jauges de contraintes afin d'obtenir un résultat numérique correspondant à la contrainte subie. Il utilise notamment un convertisseur analogique digital conventionnel. Du document IEEE spectrum vol. 6 oct. 1969 p. 85 il est connu d'utiliser un convertisseur analogique digital du type à double rampe dans un appareil de pesage.

Lors de la réalisation d'un circuit électronique de ce type de grande qualité, il apparaît au niveau des circuits d'amplification analogique du signal une importante complication, surtout si l'on doit conserver une grande précision en fonction des variations de la température ambiante et de la tension d'alimentation — dans le cas où l'équipement doit être alimenté sur batteries — et une grande stabilité dans le temps. Cela implique en effet l'introduction de circuits stabilisateurs de tension, de circuits de compensation des dérives et de nombreux réglages à faire en fin de fabrication. Tous ces facteurs ont une incidence néfaste sur le coût de cette électronique.

La présente invention a précisément pour but de remédier au moins partiellement à ces inconvénients, en proposant un dispositif peu coûteux permettant d'éliminer tous les circuits de stabilisation et de compensation ainsi que les réglages correspondants.

A cet effet, la présente invention a pour objet un dispositif selon la revendication 1.

Dans le dispositif selon l'invention, les seuls réglages qui subsistent sont liés au capteur utilisé, et non à l'électronique. Un tel dispositif fait appel simultanément à une partie analogique et une partie digitale formant un tout indissociable dans la mesure où le fonctionnement ne peut s'envisager que globalement.

Le dessin annexé illustre, schématiquement et à titre d'exemple, une forme d'exécution du dispositif de pesage objet de la présente invention.

La figure 1 est une vue en coupe schématique de cette forme d'exécution.

La figure 2 est une vue de dessus, agrandie, d'un détail de la fig. 1.

La figure 3 est un schéma d'un circuit électronique se rapportant à cette forme d'exécution.

La figure 4 est un diagramme explicitant les diverses séquences de fonctionnement de cette forme d'exécution.

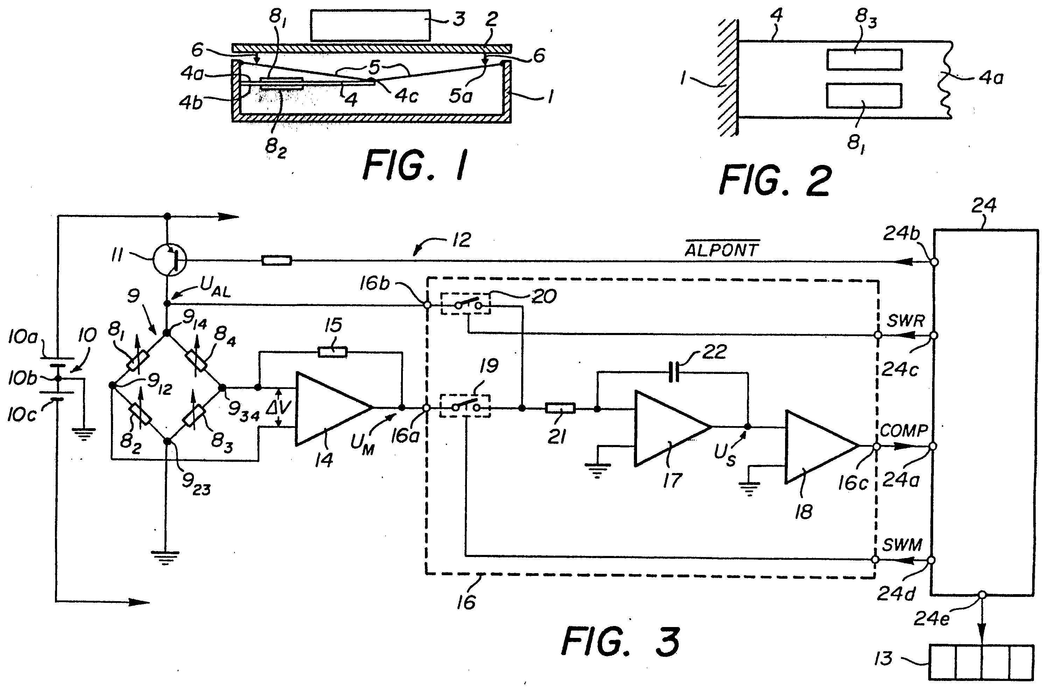

Le dispositif de pesage représenté à la fig. 1 comprend un socle 1, à la partie supérieure duquel se trouve disposé un plateau horizontal 2 destiné à supporter l'article 3 dont on veut déterminer le poids. A l'intérieur du socle 1 se trouve disposée une poutre de flexion 4 encastrée par l'une de ses extrémités dans la paroi latérale du socle 1. Cette poutre 4 est agencée de façon à s'étendre sensiblement horizontalement au-dessous du plateau 2 avec son extrémité libre 4c située sensiblement à la verticale du milieu du plateau 2. Entre le plateau 2 et la poutre de flexion 4 se trouvent disposés quatre leviers 5 (seulement deux d'entre eux étant représentés au dessin), montés articulés par une de leurs extrémités sur la partie supérieure du socle 1 et par l'autre extrémité sur l'extrémité libre 4c de la poutre 4, le plateau 2 venant par ailleurs reposer en des points intermédiaires 5a de ces leviers 5 à l'aide de bras d'appui 6. L'ensemble ainsi réalisé est destiné à permettre, ainsi qu'il est bien connu, l'application sur l'extrémité libre 4c de la poutre de flexion 4 d'une force verticale descendante proportionnelle à l'intensité du poids de l'article 3 supporté par le plateau (proportionnalité fonction des grandeurs des bras de levier).

Sur la poutre de flexion 4 se trouvent par ailleurs montées quatre jauges de contrainte 8 de résistance identique R, à savoir, respectivement, deux premières jauges $8_1$ et $8_3$ (fig. 2) montées côte à côte sur la face supérieure 4a de la poutre 4 de façon à travailler en extension, et deux autres jauges $8_2$ et $8_4$ montées côte à côte sur la face inférieure 4b de la poutre 4 de façon à travailler en contraction. Ces jauges de contrainte $8_1$ à $8_4$, dont la résistance électrique R subit une variation qui est fonction du poids de l'article 3 placé sur le plateau 2, sont destinées à être intégrées (fig. 3) dans un circuit électronique 12 chargé d'élaborer un signal digital représentatif du poids de cet article, le signal ainsi élaboré étant alors transmis à un organe d'affichage 13.

Pour ce faire, les jauges de contrainte $8_1$ à $8_4$ sont électriquement connectées entre elles de façon à former un pont de résistance 9 (fig. 3), ces connexions étant réalisées de façon que les jauges $8_1$ et $8_3$ constituent deux des côtés opposés de ce pont 9, cependant que les jauges $8_2$ et $8_4$ constituent les deux autres côtés opposés du pont. Deux des sommets opposés $9_{14}$ et $9_{23}$ du pont 9 sont ainsi destinés à servir de bornes d'entrée pour ce pont, cependant que les deux autres sommets opposés $9_{12}$ et $9_{34}$ sont destinés à servir de bornes de sortie pour le pont.

Le pont 9 est destiné à être alimenté par une source de tension continue 10, dont le pôle positif 10a se trouve relié à l'entrée $9_{14}$ du pont par l'intermédiaire d'un interrupteur 11 (interrupteur 11 constitué par un transistor dont l'émetteur est relié à ladite borne positive de la source et dont le collecteur est relié à ladite entrée $9_{14}$ du pont) et dont le point milieu 10 se trouve relié à la masse, l'autre entrée $9_{23}$ du pont étant également reliée à la masse. Le pôle négatif 10c de cette source de tension 10, ainsi qu'également son pôle positif 10a, sont par ailleurs reliés aux différents organes constitutifs du circuit 12 de façon à assurer l'alimentation de ces organes (liaisons non représentées au dessin, mais simplement esquissées par les flèches issues des pôles 10a et 10c). Les deux bornes de sortie $9_{23}$ et $9_{34}$ du pont 9 sont, quant à elles, reliées aux deux entrées d'un amplificateur 14, muni d'une résistance de contre-réaction 15 branchée entre sa sortie et celle de ses entrées reliées à la borne $9_{34}$.

La sortie de l'amplificateur 14 est reliée à l'une des entrées de tension 16a d'un convertisseur analogique digital à double rampe 16, dont l'autre entrée de tension 16b se trouve reliée à la borne d'entrée $9_{14}$ du pont 9. Ce convertisseur 16 se compose, de manière connue, d'un intégrateur 17, d'un comparateur 18 et de deux interrupteurs électroniques 19 et 20, le tout étant agencé de la manière suivante : les interrupteurs 19 et 20 sont respectivement reliés par l'une de leurs bornes, aux entrées de tension respectives 16a et 16b du convertisseur 16, cependant qu'ils se trouvent reliés par leur autre borne (par l'intermédiaire d'une résistance 21) à l'une des entrées de l'intégrateur 17 dont l'autre entrée est reliée à la masse ; la sortie de l'intégrateur 17 (intégrateur 17 pourvu d'une capacité 22 branchée entre sa sortie et celle de ses entrées reliée aux interrupteurs 19 et 20) se trouve quant à elle reliée à l'une des entrées du comparateur 18, dont l'autre entrée est reliée à la masse et dont la sortie constitue la sortie 16c du convertisseur 16.

Le circuit de traitement 12 comprend encore un microprocesseur 24 chargé d'assurer le pilotage de l'ensemble du circuit, se composant, de manière connue, d'une horloge, de mémoires de programme, de mémoires de données, et d'une unité de contrôle comportant des organes aptes à effectuer des opérations arithmétiques (éléments non représentés au dessin). Ce microprocesseur 24 est relié par son entrée 24a à la sortie 16c du convertisseur 16, et par sa sortie 24e à l'organe d'affichage 13. Le microprocesseur 24 comprend encore trois sorties de commande 24b, 24c et 24d respectivement reliées à la base du transistor 11, à la commande de l'interrupteur 20 et à la commande de l'interrupteur 19. Les sorties de commande 24c et 24d ont pour fonction de déclencher, à des instants bien déterminés qui seront explicités ci-après, l'ouverture ou la fermeture des interrupteurs respectifs 20 et 19. La sortie de commande 24b a quant à elle plus spécialement pour fonction, à des instants également bien déterminés, soit de rendre le transistor 11 passant de façon à appliquer une tension $U_{al}$ sur la borne d'entrée $9_{14}$ du pont 9 (tension $U_{al}$ sensiblement égale à la moitié de la tension de la source 10), soit de bloquer le transistor 11 de façon à appliquer une tension sensiblement nulle sur cette borne d'entrée $9_{14}$ (tension sensiblement nulle du fait que l'autre entrée $9_{23}$ est à la masse et que les jauges $8_1$ à $8_4$ présentent une faible impédance).

Le pont 9 a pour fonction, lorsqu'il est alimenté sous la tension $U_{al}$, de générer entre ses sorties $9_{12}$ et $9_{34}$ une tension $\Delta V$ telle que :

$$\Delta V = kU_{al}f(\Delta R) = kU_{al}f(P)$$

où k désigne une constante, P l'intensité du poids de l'article déposé sur le plateau 2, et $\Delta R$ la variation de résistance des jauges 8 résultant de la présence du poids P (la valeur $\Delta V$ s'avérant sensiblement proportionnelle à $\Delta R$ pour des contraintes raisonnables). Cette tension de sortie $\Delta V$ devient nulle lorsque le pont 9 n'est plus alimenté (transistor 11 bloqué).

L'amplificateur 14 a pour fonction d'assurer l'amplification de la tension $\Delta V$ injecté à son entrée, en donnant en sortie un signal $U_M$ tel que :

$$U_M = G(\Delta V + U_{of})$$

où G et $U_{of}$ représentent respectivement le gain et la tension de décalage (offset) de l'amplificateur (tout amplificateur réel présentant, ainsi qu'il est bien connu, une tension de décalage qui varie en fonction de différents paramètres tels que tension d'alimentation de l'amplificateur, température ambiante, vieillissement de l'amplificateur).

Dans le cas où le pont 9 n'est plus alimenté, l'amplificateur 14 donne ainsi en sortie un signal $U'_M$ tel que :

$$U'_M = GU_{of}$$

Le convertisseur analogique digital 16 a quant à lui pour fonction, en combinaison avec le processeur 24, d'assurer la conversion des tensions analogiques $U_M$ et $U'_M$ en des valeurs digitales, et d'élaborer la différence $(U_M - U'_M)$, de façon à donner un résultat qui soit indépendant de la tension de décalage variable $U_{of}$ de l'amplificateur 14. L'utilisation de la tension $U_{Al}$ comme tension de référence pour le convertisseur 16 permet par ailleurs de manière tout à fait inattendue, ainsi qu'on va le montrer ci-après, de s'affranchir de l'erreur susceptible de provenir de la dérive de la tension de la source 10, de sorte qu'on peut utiliser pour cette source 10 une simple pile du commerce au lieu d'utiliser des alimentations stabilisées coûteuses (le résultat de la mesure étant en effet rendu indépendant de la dérive de la tension de cette source 10).

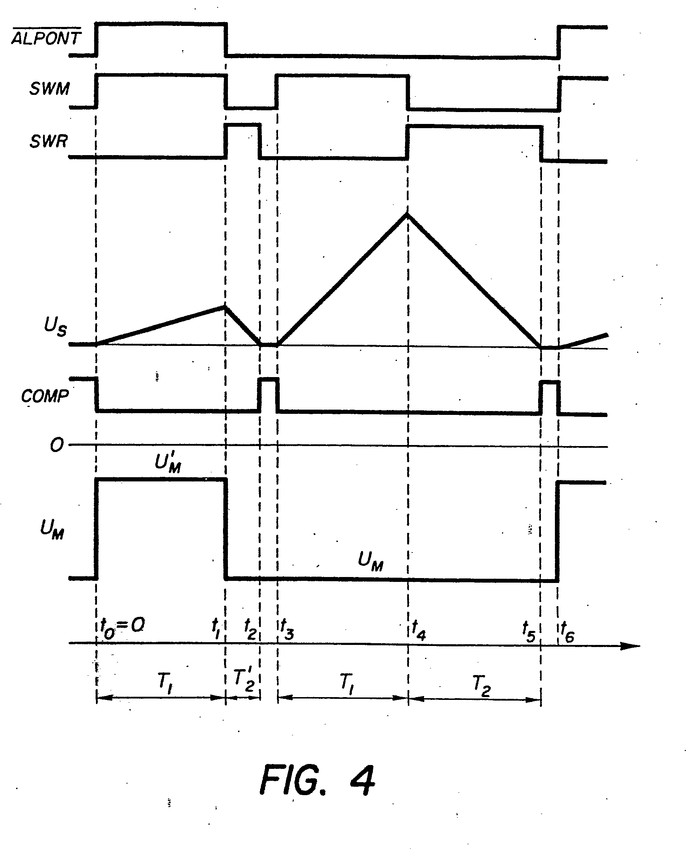

Le fonctionnement du dispositif qui vient d'être décrit est le suivant : l'article 3 à peser ayant été déposé sur le plateau 2 du dispositif, le plateau 2 applique sur l'extrémité libre 4c de la poutre de flexion 4 une force verticale descendante proportionnelle au poids P de cet article 3, de sorte que les jauges $8_1$ à $8_4$ sont soumises à une variation de résistance $\Delta R$ fonction de ce poids P. Le circuit électrique associé au pont de jauges 9 fonctionne alors de la manière suivante durant tout un cycle de mesures : soient tout d'abord respectivement (fig. 3 et 4) ALPONT, SWR et SWM les signaux fournis par les sorties de commande respectives 24b, 24c et 24d du processeur 24 ; $U_S$ le signal élaboré en sortie de l'intégrateur 17 ; COMP le signal généré en sortie du comparateur 18 ; et $U_M$ la tension apparaissant à la sortie de l'amplificateur 14.

A l'instant $t_0 = 0$ (début du cycle de mesures), le microprocesseur 24 commande respectivement la coupure de l'alimentation du pont 9 et la fermeture de l'interrupteur de mesure 19 (l'interrupteur 20 restant par ailleurs ouvert depuis la fin du cycle précédent). L'intégrateur 17 procède alors pendant une durée fixe $T_1$ qui lui a été préalablement imposée (voir évolution de la valeur $U_S$ sur le diagramme de la fig. 4) à l'intégration de la valeur $U'_M$ délivrée par l'ampli 14.

Au bout de cette période $T_1$, c'est-à-dire à l'instant $t_1$, le microprocesseur 24 commande alors respectivement la mise en alimentation du pont 9, l'ouverture de l'interrupteur de mesure 19 et la fermeture de l'interrupteur de référence 20. L'intégrateur 17 procède alors pendant une durée variable $T'_2$, à la décharge de la valeur $U_S$ emmagasinée, cette décharge s'arrêtant automatiquement lorsque le comparateur 18 bascule à la fin de ce temps $T'_2$ (c'est-à-dire l'instant $t_2$). A cet instant $t_2$, le microprocesseur 24 commande alors l'ouverture de l'interrupteur de référence 20, pendant qu'il procède simultanément à la mise en mémoire de la valeur $T'_2$, ceci jusqu'à l'instant $t_3$.

A l'instant $t_3$, le microprocesseur 24 commande la fermeture de l'interrupteur de mesure 19, et l'intégrateur 17 procède alors pendant la même durée fixe $T_1$ à l'intégration de la valeur $U_M$ délivrée par l'ampli 14.

Au bout de cette période $T_1$, c'est-à-dire à l'instant $t_4$, le microprocesseur 24 commande alors l'ouverture de l'interrupteur 19 et la fermeture de l'interrupteur 20, et l'intégrateur 17 procède pendant une durée variable $T_2$ à la décharge de la valeur $U_S$ emmagasinée. Cette décharge s'arrête automatiquement lorsque le comparateur 18 bascule à la fin du temps $T_2$ (c'est-à-dire à l'instant $t_5$). A cet instant $t_5$, le microprocesseur commande alors l'ouverture de l'interrupteur 20 et il prend simultanément en compte la valeur $T_2$ qui lui est fournie par le comparateur 18. Le microprocesseur élabore alors la différence $(T_2 - T'_2)$ et envoie après traitement un signal correspondant sur l'affichage 13, lequel signal est exactement représentatif du poids de l'article 3 disposé sur le plateau 2 du dispositif. Un court instant $t_6$ après l'instant $t_5$ (décalage nécessaire pour permettre au microprocesseur d'effectuer les opérations susmentionnées), le microprocesseur commande alors respectivement la coupure de l'alimentation du pont 9 et la fermeture de l'interrupteur de mesure 19, de sorte que le circuit est prêt à effectuer un autre cycle de mesure.

Le signal fourni par le microprocesseur 24 à l'affichage 13 est bien représentatif du poids $P$ de l'article 3, étant donné que les opérations susmentionnées ont permis de supprimer le signal parasite dû à la tension de décalage $U_{of}$ de l'ampli 14. Ce signal est d'autant plus représentatif de ce poids $P$ qu'il s'avère en outre tout à fait indépendant des éventuelles fluctuations de la tension d'alimentation $U_{al}$ (et donc de la tension de la source 10), ainsi qu'on va maintenant le démontrer.

Soient respectivement $R_1$ et $C$ les valeurs de la résistance 21 et de la capacité du condensateur 22 associés à l'intégrateur 17. La valeur $U_S$ élaborée par l'intégrateur 17 obéit alors respectivement, durant la période comprise entre les instants $t_0$ et $t_2$, à la relation :

$$U_S = \frac{1}{R_1 C} \int_0^{T_1} U'_M = \frac{1}{R_1 C} \int_0^{T_2} U_{AL} \qquad (1)$$

et durant la période comprise entre les instants $t_3$ et $t_5$, à la relation :

$$U_S = \frac{1}{R_1 C} \int_0^{T_1} U_M = \frac{1}{R_1 C} \int_0^{T_2} U_{AL} \qquad (2)$$

La relation (1) peut aussi s'écrire, compte tenu du fait que la fréquence de répétition du cycle de mesure est choisie notablement supérieure à la dérive des valeurs $U_{AL}$ et $U_{of}$ (et donc des valeurs $U_M$ et $U'_M$) :

$$U'_M = U_{AL} \frac{T'_2}{T_1} \qquad (1')$$

De façon analogue, la relation (2) peut aussi s'écrire :

$$U_M = U_{AL} \frac{T_2}{T_1} \qquad (2')$$

En effectuant la différence des deux relations susmentionnées, on obtient alors :

$$(U_M - U'_M) = U_{AL} \frac{T_2 - T'_2}{T_1} \qquad (3)$$

et en remplaçant les valeurs $U_M$ et $U'_M$ par leurs valeurs indiquées précédemment :

$$[G(\Delta V + U_{of}) - GU_{of}] = U_{AL} \frac{T_2 - T'_2}{T_1} \qquad (4)$$

soit

$$G\Delta V = kGU_{al} f(P) = U_{AL} \frac{T_2 - T'_2}{T_1} \qquad (4')$$

d'où la relation finale :

$$\frac{T_2 - T'_2}{T_1} = kGf(P) \qquad (5)$$

Cette relation (5) montre clairement que la

valeur $(T_2 - T'_2)$ qui est fournie à l'affichage est représentative du poids P, et qu'elle ne dépend plus, ni de la tension de décalage $U_{of}$ de l'ampli 14, ni de la tension d'alimentation $U_{AL}$ (et donc de la tension de la source 10).

Le dispositif qui vient d'être décrit présente de nombreux avantages, parmi lesquels on peut citer :

— absence totale de dispositifs de réglage de la tension de décalage des amplificateurs,

— insensibilité à toute variation de ces tensions de décalage engendrée par des variations de température ou de tension d'alimentation ou par une dérive à long terme des amplificateurs,

— suppression des circuits de stabilisation de la tension d'alimentation du pont de mesure en raison de l'autocompensation de la mesure.

Un tel dispositif est donc tout particulièrement destiné à des équipements devant être alimentés par des batteries.

Le mode d'opération du convertisseur analogique digital peut aussi être utilisé dans toutes applications utilisant des capteurs résistifs (éventuellement autres que des jauges de contrainte) dont la tension de sortie est proportionnelle à l'effet à mesurer. On pourrait ainsi envisager d'utiliser des capteurs de température, ou tout autre type de capteurs appropriés.

**Revendications**

1. Dispositif pour mesurer l'intensité d'une force appliquée transversalement sur l'extrémité libre d'une poutre de flexion encastrée, comprenant :

— un ensemble de jauges de contrainte $(8_1, 8_2, 8_3, 8_4)$ montées sur ladite poutre de flexion (4), disposées sur la face de la poutre travaillant en extension et/ou sur la face travaillant en contraction, lesdites jauges étant électriquement connectées entre elles sous la forme d'un pont (9) de façon que ledit pont élabore une tension de sortie fonction de l'intensité de ladite force appliquée à la poutre lorsque ledit pont est alimenté en courant,

— une source de tension (10) destinée à alimenter ledit pont (9),

— un amplificateur (14) branché en sortie dudit pont (9),

— un convertisseur analogique digital (16) branché en sortie dudit amplificateur (14), auquel lui est associé un microprocesseur (24), et

— un organe d'affichage (13) branché en sortie dudit microprocesseur (24), destiné à permettre l'affichage d'un signal représentatif de l'intensité de ladite force,

caractérisé en ce que le convertisseur (16) est du type à double rampe et qu'il comporte des moyens de commutation (19, 20) commandés par le microprocesseur (24), pour prendre comme tension de référence la tension d'alimentation (10) non stabilisée du pont (9) elle-même.

2. Dispositif selon la revendication 1, caractérisé en ce qu'il comporte des moyens (11) commandés par le microprocesseur (24) pour couper momentanément lors de la mesure l'alimentation du pont (9), afin de mesurer alors à la sortie de l'amplificateur (14) la tension de décalage.

**Claims**

1. Device for measuring the magnitude of a force applied transversely to the free end of a cantilevered beam, comprising :

— a set of strain gauges $(8_1, 8_2, 8_3, 8_4)$ on said cantilevered beam (4), positioned on the face of the beam that is in tension during use and/or on the face that is in compression when in use, said gauges being electrically connected together to form a bridge (9) so that said bridge produces an output voltage that is a function of the magnitude of said force applied to the beam, when the bridge is supplied with a current,

— a voltage source (10) for supplying current to said bridge (9),

— an amplifier (14) connected to the output of said bridge (9),

— an analog-to-digital converter (16) connected to the output of said amplifier (14), a microprocessor (24) being associated with said converter, and

— a display (13) connected to the output of said microprocessor (24), for displaying a signal that is representative of the magnitude of said force,

characterized in that the converter (16) is of the two-slope type and in that it comprises switch means (19, 20) controlled by the microprocessor (24) whereby the non-stabilized supply voltage of the bridge (9) is used as reference voltage.

2. Device according to claim 1, characterized in that it comprises means (11) controlled by the microprocessor (24) for momentarily cutting off the supply of current to the bridge (9) during the measuring operation, in order to then measure the offset voltage at the output of the amplifier (14).

**Ansprüche**

1. Vorrichtung zur Messung der Grösse einer Kraft, welche quer auf das freie Ende eines einseitig eingespannten Biegebalkens einwirkt, mit Spannungmesselementen $(8_1, 8_2, 8_3, 8_4)$, die am Biegebalken (4) auf der Balkenseite, welche auf Zug und/oder auf der Balkenseite, welche auf Druck beansprucht ist, angebracht sind, wobei diese Messelemente untereinander derart als Brücke (9) verschaltet sind, dass die Brücke eine von der Grösse der einwirkenden Kraft abhängige Spannung abgibt, wenn die Brücke stromgespiesen ist,

— einer Spannungsquelle (10) zur Speisung der Brücke (9),

— einem Verstärker (14) am Ausgang der Brücke (9) angeschaltet,

— einem digital-analog Umsetzer (16) angeschaltet mit einem zugehörigen Mikroprozessor (24),

— einem Anzeigeteil (13) am Ausgang des Mikroprozessors angeschaltet, damit ein die Grösse der Kraft darstellendes Signal angezeigt werden kann,

dadurch gekennzeichnet, dass der Umsetzer (16) ein zwei Flanken Umsetzer ist und vom Mikroprozessor (24) gesteuerte Umschaltmittel (19, 20) besitzt um als Referenzspannung die unstabilisierte Speisespannung (10) der Brücke (9) zu verwenden.

2. Vorrichtung gemäss Anspruch 1, dadurch gekennzeichnet, dass er vom Mikroprozessor (24) gesteuerte Mittel (11) besitzt um die Speisung der Brücke (9) während der Messung kurzzeitig zu unterbrechen um dann die Verschiebespannung am Ausgang des Verstärkers (14) zu messen.

FIG. 1

FIG. 2

FIG. 3

**FIG. 4**